# EUROPEAN PATENT APPLICATION

(11) **EP 3 896 010 A1**
(43) Date of publication of application: **20.10.2021**
(21) Application number: 20170103.4
(22) Date of filing: 17.04.2020
(51) Int. Cl.: B65G 21/20, B65G 47/71, B65G 47/76

(54) **A DIVIDER FOR PACKAGING CONTAINERS, AND A RECEIVING GUIDE FOR SUCH DIVIDER**

(71) Applicant: Tetra Laval Holdings & Finance S.A., 1009 Pully (CH)
(72) Inventor: Magnusson, Johan, 21214 Malmö (SE)
(74) Representative: Tetra Pak - Patent Attorneys SE

(57) **Abstract**

A divider (100) for shifting the conveying path of transported packaging containers (20) from a feeding line (130) to a transversally shifted distribution line (140), is provided. The divider (100) comprises a guide inlet (102), and a guide outlet (104) extending from the downstream end of the guide inlet (102) and being configured to deliver guided packaging container (20) to an entry section (142) of the distribution line (140), wherein the guide outlet (104) is extendable reciprocally from a retracted position, and an extended position. The divider (100) further comprises a receiving guide (120) forming a guiding track (122) for receiving packaging containers (20) delivered from the guide outlet (104), wherein said guiding track (122) being configured to at least partly cover the first longitudinal distance between the guide outlet (104) and the entry section (142) of the distribution line (140).

## Description

### Technical Field

The invention relates to downstream equipment of a packaging machine. In particular, the present invention relates to a divider for packaging containers, and to a receiving guide for such divider.

### Background Art

Within the food industry, beverages and other products are often packed in individual packages. Packages intended for liquid food are typically produced from a packaging laminate comprising a core layer of paper or paperboard and an outer, liquid-tight layer of thermoplastic material on at least that side of the core layer which will form the inside of the packages.

Such packages are made in packaging machines that are capable of transforming the laminate material into a formed, filled, and sealed package. Modern packaging machines operate at an high speeds, producing up to 40000 packages per hour.

Secondary packages are manufactured for facilitated storage, transportation, and distribution of the individual packages. Such secondary packages are typically formed as boxes or trays accommodating a plurality of individual packages.

Downstream equipment is required for handling the series of individual packages exiting the packaging machine. This downstream equipment is not only provided to feed the flow of individual packages to the secondary packaging station, but also to divide the flow of packages from a single transport line to a plurality of parallel transport lines. By dividing the package flow into parallel lines, the individual packages are aligned in a matrix structure which is often desired for the secondary package. For example, a secondary package may store ten rows of packages in five columns, three rows of packages in three columns, etc.

For this, a divider is provided at the end of a single line transport path. Immediately downstream the single line transport path (which receives a flow of packages from the packaging machine) the multiple line transport path is arranged. Hence, the divider is constructed to divert the flow of packages into these different lines. The divider is operational as the single line transport path is driven. The packages will thus always be in motion as their transport direction is shifted by means of the divider.

WO2015003838 by the same applicant describes one example of a divider arrangement for guiding packages between two conveyor belts as the packages are transported. An H-bot assembly is controlled to move a pair of guide rails, between which the packages are guided, across the conveyor belts. Initially, the guide rails are stationary in the longitudinal direction (the direction of the flow of incoming packages) and aligned with the conveyor belt carrying the flow of packages to be divided. Once a number of packages are positioned in between the guide rails the divider arrangement is accelerated in the longitudinal direction, and controlled to shift its position to change the transport path of the trapped packages so that they instead are aligned with the correct position of the receiving conveyor belt. The transversal position shift is performed as the guide rails also move longitudinally. Once the packages are in their desired transversal position, the guide rails release the packages and return to their initial position to receive a new set of packages.

Although the proposed solution is extremely robust and provides very efficient moving of packages, there is an increased risk of undesired motion of the packages once their transversal positions have been shifted. For the situation described earlier, when a single line of packages is divided to a plurality of parallel lines, such undesired motion can lead to unwanted rotation of the packages which in turn, in worst case, can lead to package jamming.

There is thus a need for improvements for dividing a single line flow of packages to several parallel lines, and especially for ensuring proper orientation of the packages once their transversal position has been shifted.

### Summary

It is an object of the invention to at least partly overcome one or more of the above-identified limitations of the prior art. In particular, it is an object provide a divider which can maintain the transversal orientation of packages once the guiding rails of the divider releases the packages.

To solve these objects a divider is provided, for shifting the conveying path of transported packaging containers from a feeding line to a transversally shifted distribution line, transversally shifted being in a direction orthogonal to a direction of incoming packaging containers from the feeding line. The divider comprises a guide inlet configured to receive incoming packaging containers from the feeding line, and a guide outlet extending from the downstream end of the guide inlet and being configured to deliver guided packaging container to an entry section of the distribution line. The guide outlet is extendable reciprocally from a retracted position, at which there is a first longitudinal distance between the guide outlet and the entry section of the distribution line, and an extended position, at which there is a second longitudinal distance between the guide outlet and the entry section of the distribution line. Here, the longitudinal distance is the distance measured in the direction of flow of the incoming packaging containers at the guide inlet. The divider further comprises a receiving guide forming a guiding track for receiving packaging containers delivered from the guide outlet, wherein said guiding track being configured to at least partly cover the first longitudinal distance between the guide outlet and the entry section of the distribution line.

The first longitudinal distance may be greater than the second longitudinal distance. More preferably, the first longitudinal distance is greater than the longitudinal width of a packaging container, and the second longitudinal distance is less than the longitudinal width of a packaging container.

The transversal position of the receiving guide may be fixed.

The receiving guide is preferably configured to move longitudinally. During the longitudinal motion of the receiving guide, the entry section of the distribution line may be configured to prevent transversal motion of the receiving guide.

The entry section of the distribution line may be provided with at least one guiding rod onto which the receiving guide is sliding as it moves longitudinally.

The longitudinal motion of the receiving guide may be synchronized with the longitudinal motion of the guide outlet.

During longitudinal motion of the receiving guide, the longitudinal distance between the receiving guide and the guide outlet may be constant.

The divider may comprise a plurality of receiving guides, wherein the transversal position of each receiving guide is aligned with the transversal position of an associated distribution line.

In an embodiment, the plurality of receiving guides are arranged in parallel. The motion of all receiving guides may be synchronized.

According to a second aspect, a receiving guide for a divider is provided. The divider is configured to shift the conveying path of transported packaging containers from a feeding line to a transversally shifted distribution line. The receiving guide comprises a guiding track extending longitudinally between a guide outlet of the divider and an entry section of the distribution line, wherein the guiding track is moveable to at least partly cover a longitudinal distance between the guide outlet and the entry section of the distribution line.

According to a third aspect, a method for shifting the conveying path of transported packaging containers from a feeding line to a transversally shifted distribution line is provided. The method comprises i) feeding packaging containers from the feeding line to a guide inlet, ii) shifting the transversal position of the guide inlet while extending a guide outlet from the downstream end of the guide inlet as packaging containers are exiting the guide inlet, and iii) retracting the guide outlet when the guide inlet has reached its shifted position such that a downstream end of the guide outlet, in its retracted position, is arranged at a first longitudinal distance from an entry section of the distribution line. The method further comprises iv) at least partly covering the first longitudinal distance between the guide outlet and the entry section of the distribution line by means of a receiving guide.

The method may further comprise longitudinally moving the receiving guide such that the longitudinal distance between the receiving guide and the downstream end of the guide outlet is constant.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Figs. 1a-d are schematic top views of a divider arrangement according to prior art operating to shift the position of a series of transported packaging containers;
Figs. 2a-f are schematic top views of a divider according to an embodiment operating to shift the position of a series of transported packaging containers;
Fig. 3a is an isometric view of a divider according to an embodiment;
Fig. 3b is an isometric view of parts of the divider shown in Fig. 3a; and
Fig. 4 is a schematic view of a method according to an embodiment.

### Detailed description

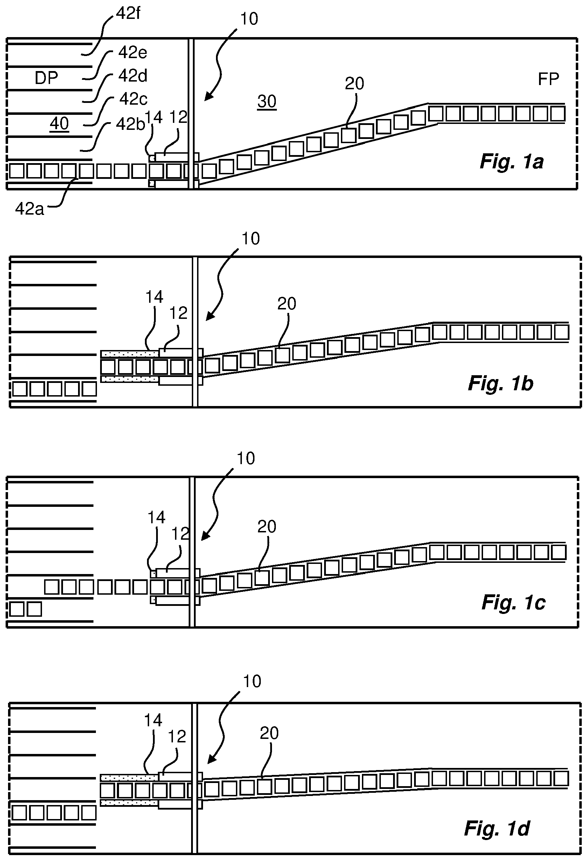

With reference to Figs. 1a-d a prior art divider arrangement 10 is shown. The divider arrangement 10 is configured to shift the transversal position of a flow of packaging containers 20 from a feeding position FP, indicated at the right in the drawings, to a distribution position DP, indicated at the left in the drawings. Here, by transversal it is meant orthogonal to the direction of flow of incoming packaging containers 20 from the feeding position FP. As explained earlier, the divider arrangement 10 is provided at the end of a transport path 30. Immediately downstream the transport path 30 (which receives the flow of packaging containers 20 from an upstream packaging machine) a multiple line transport path 40 is arranged. The transport path 40 comprises several parallel distribution lines 42a-f. Hence, the divider arrangement 10 is constructed to divert the flow of packaging containers 20 into these different distribution lines 42a-f.

Starting in Fig. 1a, a guide inlet 12 and a retracted guide outlet 14 are transversally aligned with the first distribution line 42a. When it is decided to redirect the flow of packaging containers 20 to another distribution line 42b, the guide outlet 14 is extended in the feeding direction (i.e. the longitudinal direction) while at the same time the guide inlet 12 and the guide outlet 14 are moved transversally to be aligned with the target distribution line 42b. This is shown in Fig. 1b.

Once the guide inlet 12 and the guide outlet 14 are in the desired position, the guide outlet 14 is retracted as shown in Fig. 1c. At this position the divider arrangement 10 is idle to initiate a new transversal position shift, as indicated in Fig. 1d. While again referring to Fig. 1c, the packaging containers 20 being released from the guide outlet 14 as it retracts, are moving without any transversal borders towards the distribution line 42b.

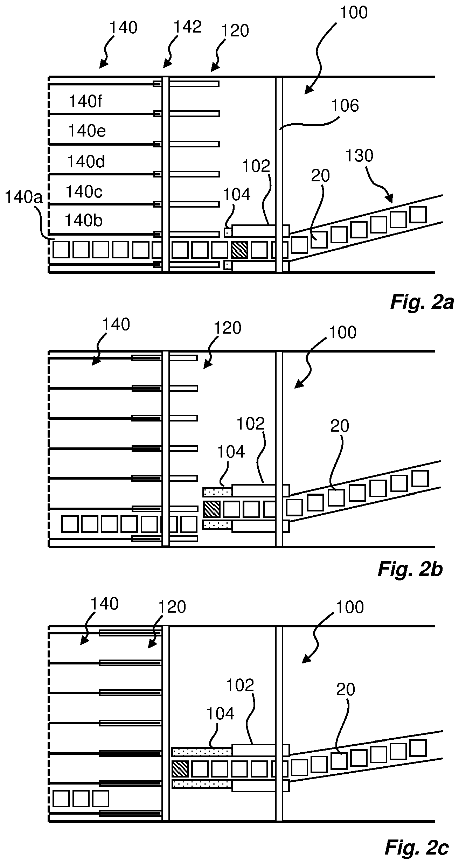

Now turning to Figs. 2a-f, a divider 100 according to an embodiment will be described. The divider 100 aims to improve how packaging containers 20 are moving through the divider 100, and especially after the packaging containers 20 are released from the guide outlet as it retracts.

Starting in Fig. 2a, the divider 100 is arranged to shift the conveying path of a flow of packaging containers 20 as they are moving from a feeding line 130 to a transversally shifted distribution line 140.

The packaging containers 20 are entering the divider 100 by moving into a guide inlet 102. The guide inlet 102 surrounds the incoming packaging containers 20 on each transversal side. The guide inlet 102 may be provided with vertical conveyor belts in order to drive the packaging containers 20 forward, as an assist to the underlying conveyor belt of the feeding line 130.

The longitudinal extension of the guide inlet 102 corresponds to the longitudinal extension of a plurality of packaging containers 20. In the shown example the length of the guide inlet 102 is approximately covering three packaging containers 20, although the guide inlet 102 may be substantially longer.

A guide outlet 104 is arranged at the downstream end of the guide inlet 102. The guide outlet 104 is also configured to guide the packaging containers 20 as they are arranged within the guide outlet 104, and the guide outlet 104 may be configured in a similar configuration as the guide inlet 102 (i.e. as opposite vertical conveyor belts). However, the guide outlet 104 is configured to move relative the guide inlet 102.

In the shown example there are multiple distribution lines 140a-f arranged in parallel and aligned in the transversal direction, i.e. transverse to the feeding direction. Each distribution line 140a-f is capable of receiving incoming packaging containers 20 as they are delivered from the guide outlet 104.

The guide outlet 104 thus directs the packaging containers 20 towards an entry section 142 of the distribution lines 140a-f. During operation, as will be explained with reference to Figs. 2a-f, the guide outlet 104 is extendable reciprocally from a retracted position, at which there is a first longitudinal distance between the guide outlet 104 and the entry section 142 of the distribution line 140, and an extended position, at which there is a second longitudinal distance between the guide outlet 104 and the entry section 142 of the distribution line 140.

A receiving guide 120 is arranged between the guide outlet 104 and the entry section 142 of the distribution line 140. The receiving guide 120 is forming a guiding track 122 for receiving the packaging containers 20 delivered from the guide outlet 104. The guiding track 122 is further configured to at least partly cover the first longitudinal distance between the guide outlet 104 and the entry section 142 of the distribution line 140.

Operation of the divider 100 will now be explained. Starting in Fig. 2a, the guide inlet 102 and the associated guide outlet 104 are arranged to shift the transversal position of incoming packaging containers 20 such that they will enter the first distribution line 140a. The transversal position of the guide inlet 102, and also the transversal position of the guide outlet 104, is controlled by means of a drive member 106. The drive member 106, which is shown as a transverse beam, is configured to move the guide inlet 102 and the guide outlet 104 to its desired transversal position. However, it should be realized that driving the guide inlet 102 transversally can be accomplished in various other ways which will not be described further herein.

In Fig. 2a, the guide outlet 104 is in a retracted position, leaving a maximum longitudinal distance between the guide outlet 104 and the entry section 142 of the distribution line 140a. However, this longitudinal space is substantially covered by the receiving guide 120.

When it is determined to shift the transversal position of the packaging containers 20, a motion sequence is initiated. This motion sequence, schematically illustrated in Fig. 2b, involves moving the guide inlet 102 towards the next transversal position while at the same time extending the guide outlet 104 towards the entry section 142 of the distribution line 140b. As the guide outlet 104 is extended, the receiving guide 120 withdraws towards the distribution line 120 thus leaving the longitudinal distance between the downstream end of the guide outlet 104 and the entry section 142 of the distribution line 140b essentially constant during the motion sequence.

As the packaging containers 20 are kept moving in the longitudinal direction, the extension speed of the guide outlet 104 (as well as the withdrawal speed of the receiving guide 120) is substantially the same as the longitudinal speed of the packaging containers 20.

In Fig. 2c the guide inlet 102 and the guide outlet 104 have reached their intended transversal position where they are aligned with the distribution line 140b. At this position the receiving guide 120 is completely withdrawn. The speed of the transversal shift, i.e. the time it takes for the drive member 106 to move the guide inlet 102 from one transversal position to the next transversal position, is matched so that a packaging container 20 being at the front of the guide inlet 102 when the transversal motion is initiated, will be at the front of the extended guide outlet 104 when the transversal motion is finished. To further illustrate this, the leading packaging container 20 is marked with dashed fill pattern in Figs. 2a-d.

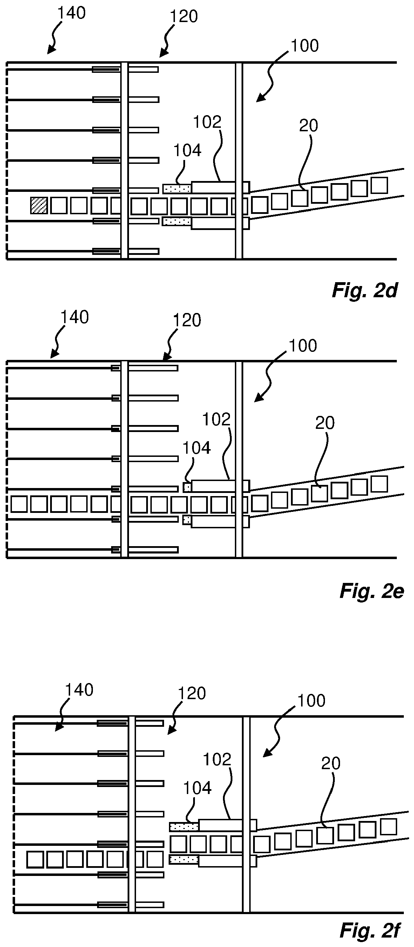

Now turning to Fig. 2d, the packaging containers 20 are moving from the guide inlet 102 and the guide outlet 104 into the desired distribution line 140b. In order to prepare another transversal position shift, the guide outlet 104 is immediately retracted towards the guide inlet 102. In order to maintain full control of the position of the packaging containers moving from the guide outlet 104 towards the entry section 142 of the distribution line 140b, the receiving guide 120 is also moving in a sequence being synchronized with the guide outlet 104. Hence, the longitudinal distance between the upstream end of the receiving guide 120 and the downstream end of the guide outlet 104 is kept constant and preferably very small, meaning well below the longitudinal width of a packaging container 20.

In Fig. 2e the guide outlet 104 has reached its retracted position and the receiving guide 120 is in its fully extended position. Importantly, at this position the packaging containers 20 being arranged between the guide outlet 104 and the entry section 142 of the distribution line 140b are fully delimited by the receiving guide 120 and the formed guiding track 122.

When it is again desired to change distribution line 140, e.g. to the next distribution line 140c, another motion sequence is started. This is shown in Fig. 2f; a transversal movement of the guide inlet 102 and guide outlet 104, a longitudinal extension of the guide outlet 104, and a withdrawal of the receiving guide 120. These three motions are all occurring simultaneously in order to allow the flow of incoming packaging containers 20 to be continuous with no interruptions or changes in speed.

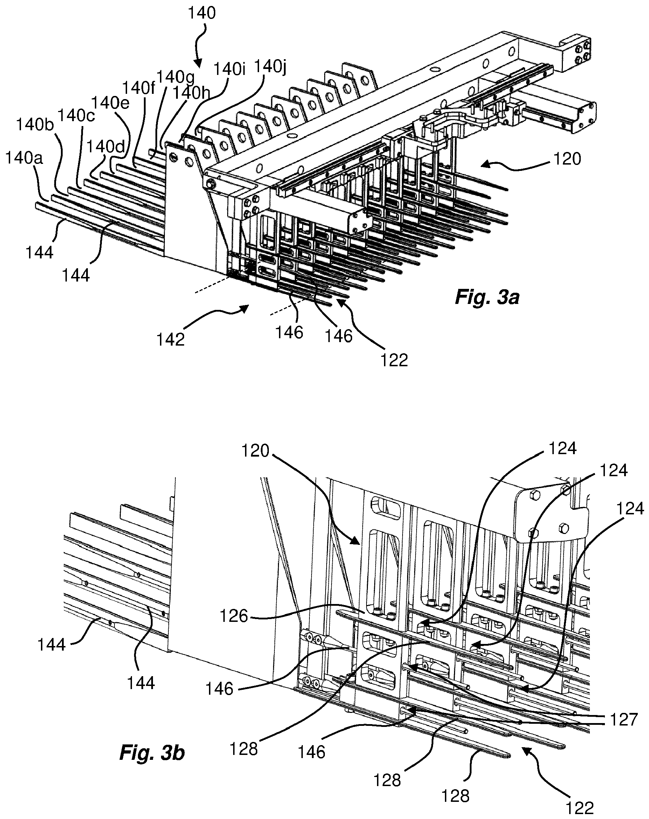

An example of a receiving guide configuration is shown in Figs. 3a-b. Here, the inlet guide and the outlet guide are omitted. Ten parallel distribution lines 140a-j are separated by longitudinal bars 144. One distribution line 140a-j is thus formed as the transversal space between two adjacent bars 144. The entry section 142 spans over the entire width of the distribution lines 140a-j. In this example, the entry section 142 is formed by longitudinal rods 146. At the upstream end of each bar 144 two rods 146 are provided, extending in the upstream direction. The two rods 146 are vertically separated. The purpose of the rods 146 is not only to define the entry section 142 of the distribution lines 140, but also to act as steering means for the receiving guide 120.

The shown example comprises a plurality of receiving guides 120, namely ten, to match the number of distribution lines 140a-j. The plurality of receiving guides 120 are forming an assembly, so that all receiving guides 120 move in a synchronized manner, i.e. they have an identical and simultaneous motion.

Each receiving guide 120 forms two opposite sidewalls, or borders, for the packaging containers 20. A more detailed view of a receiving guide 120 is shown in Fig. 3b.

As can be seen each receiving guide 120 is forming a guiding track 122 arranged between two sidewalls 124. Hence, two adjacent receiving guides 120 share a common sidewall 124.

Each sidewall 124 has a vertical body 126 having vertically separated horizontal through holes 127 for receiving the rods 146 of the entry section 142. The vertical body 126 is allowed to slide on the rods 146.

The vertical body 126 is in turn provided with three longitudinal ribs 128. The length of the ribs 128 is selected to match the longitudinal distance between the retracted end of the guide outlet 104 and the upstream end of the rods 146, so that the ribs 128 will guide the packaging containers 20 transversally when moving toward the distribution line 140a-j.

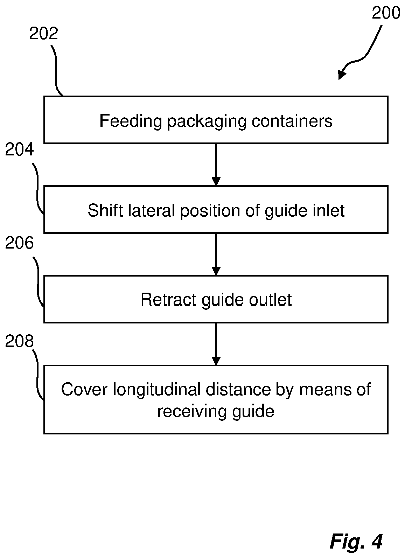

Now turning to Fig. 4, a method 200 for shifting the conveying path of transported packaging containers 20 from a feeding line 130 to a transversally shifted distribution line 140 is schematically shown. The method comprises a first step 202 of feeding packaging containers 20 from the feeding line 130 to a guide inlet 102, and a second step 204 of shifting the transversal position of the guide inlet 102 while at the same time extending a guide outlet 104 from the downstream end of the guide inlet 102 as packaging containers 20 are exiting the guide inlet 102. A third step 206 is performed, of retracting the guide outlet 104 when the guide inlet 102 has reached its shifted position such that a downstream end of the guide outlet 104, in its retracted position, is arranged at a first longitudinal distance from an entry section 142 of the distribution line 140. A fourth step 208 is performed, preferably simultaneously as performing the third step 206, of at least partly covering the first longitudinal distance between the guide outlet 104 and the entry section 142 of the distribution line 140 by means of a receiving guide 120.

The fourth step 208 is preferably performed by longitudinally moving the receiving guide 120 such that the longitudinal distance between the receiving guide 120 and the downstream end of the guide outlet 104 is constant.

From the description above follows that, although various embodiments of the invention have been described and shown, the invention is not restricted thereto, but may also be embodied in other ways within the scope of the subject-matter defined in the following claims.

## Claims

1. A divider (100) for shifting the conveying path of transported packaging containers (20) from a feeding line (130) to a transversally shifted distribution line (140), transversally shifted being in a direction orthogonal to a direction of incoming packaging containers (20) from the feeding line (130), comprising
a guide inlet (102) configured to receive incoming packaging containers (20) from the feeding line (130), and a guide outlet (104) extending from the downstream end of the guide inlet (102) and being configured to deliver guided packaging containers (20) to an entry section (142) of the distribution line (140), wherein the guide outlet (104) is extendable reciprocally from a retracted position, at which there is a first longitudinal distance between the guide outlet (104) and the entry section (142) of the distribution line (140), and an extended position, at which there is a second longitudinal distance between the guide outlet (104) and the entry section (142) of the distribution line (140), the longitudinal distance being the distance measured in the direction of flow of the incoming packaging containers (20) at the guide inlet (102),
**characterized in that** the divider (100) further comprises a receiving guide (120) forming a guiding track (122) for receiving packaging containers (20) delivered from the guide outlet (104), wherein said guiding track (122) is configured to at least partly cover the first longitudinal distance between the guide outlet (104) and the entry section (142) of the distribution line (140).

2. The divider according to claim 1, wherein the first longitudinal distance is greater than the second longitudinal distance.

3. The divider according to claim 1 or 2, wherein in use, the first longitudinal distance is greater than the longitudinal width of a packaging container, and the second longitudinal distance is less than the longitudinal width of a packaging container.

4. The divider according to claims 1-3, wherein the transversal position of the receiving guide (120) is fixed.

5. The divider according to any of the preceding claims, wherein the receiving guide (120) is configured to move longitudinally.

6. The divider according to any of the preceding claims, wherein the entry section (142) of the distribution line (140) is configured to prevent transversal motion of the receiving guide (120) as it moves longitudinally.

7. The divider according to any of the preceding claims, wherein the entry section (142) of the distribution line (140) is provided with at least one guiding rod (146) onto which the receiving guide (120) is sliding as it moves longitudinally.

8. The divider according to any of claims 5-7, wherein the longitudinal motion of the receiving guide (120) is synchronized with the longitudinal motion of the guide outlet (104).

9. The divider according to any of claims 5-8, wherein during longitudinal motion of the receiving guide (120), the longitudinal distance between the receiving guide (120) and the guide outlet (104) is constant.

10. The divider according to any of the preceding claims, comprising a plurality of receiving guides (120), wherein the transversal position of each receiving guide (120) is aligned with the transversal position of an associated distribution line (140a-j).

11. The divider according to claim 10, wherein the plurality of receiving guides (120) are arranged in parallel.

12. The divider according to claim 10 or 11, wherein the motion of all receiving guides (120) is synchronized.

13. A receiving guide (120) for a divider (100) configured to shift the conveying path of transported packaging containers (20) from a feeding line (130) to a transversally shifted distribution line (140), transversally shifted being in a direction orthogonal to a direction of incoming packaging containers (20) from the feeding line (130), wherein said receiving guide (120) comprises a guiding track (122) extending longitudinally between a guide outlet (104) of the divider (100) and an entry section (142) of the distribution line (140), said guiding track (122) being moveable to at least partly cover a longitudinal distance between the guide outlet (104) and the entry section (142) of the distribution line (140), the longitudinal distance being the distance measured in the direction of flow of the incoming packaging containers (20) at the guiding track (122) .

14. A method for shifting the conveying path of transported packaging containers (20) from a feeding line (130) to a transversally shifted distribution line (140), transversally shifted being in a direction orthogonal to a direction of incoming packaging containers (20) from the feeding line (130), the method comprising:
feeding packaging containers (20) from the feeding line (130) to a guide inlet (102),
shifting the transversal position of the guide inlet (102) while extending a guide outlet (104) from the downstream end of the guide inlet (102) as packaging containers (20) are exiting the guide inlet (102), and
retracting the guide outlet (104) when the guide inlet (102) has reached its shifted position such that a downstream end of the guide outlet (104), in its retracted position, is arranged at a first longitudinal distance from an entry section (142) of the distribution line (140), the longitudinal distance being the distance measured in the direction of flow of the incoming packaging containers (20) at the guide inlet (102)
**characterized by**
at least partly covering the first longitudinal distance between the guide outlet (104) and the entry section (142) of the distribution line (140) by means of a receiving guide (120).

15. The method according to claim 14, further comprising longitudinally moving the receiving guide (120) such that the longitudinal distance between the receiving guide (120) and the downstream end of the guide outlet (104) is constant.
